# EUROPÄISCHE PATENTANMELDUNG

(11) **EP 1 479 922 A2**
(43) Veröffentlichungstag der Anmeldung: **24.11.2004**
(21) Anmeldenummer: 04008920.3
(22) Anmeldetag: 15.04.2004
(51) Int. Cl.: F16B 5/06, F16B 19/02

(54) **Distanzhalter zur Einstellung eines Abstandes zwischen einem ersten Bauteil und einem zweiten Bauteil**

(30) Priorität: 21.05.2003 DE 20307893 U
(71) Anmelder: REHAU AG + Co, 95111 Rehau (DE)
(72) Erfinder: Olschewski, Andreas, 91083 Baiersdorf (DE)

(57) **Zusammenfassung**

Ein Distanzhalter (1) dient zur Einstellung eines Abstandes zwischen einem ersten Bauteil (2) und einem zweiten Bauteil (3). Er umfasst ein erstes Distanzhalterelement (4), welches mit dem ersten Bauteil (2) verbindbar ist, und ein zweites Distanzhalterelement (5), welches mit dem zweiten Bauteil (3) verbindbar ist. Eine Riegelanordnung (12), mittels der ein einzustellender Abstand aus einer Mehrzahl diskreter Abstände vorgegeben werden kann, umfasst mindestens einen Riegelkörper (13) und mindestens einen mit diesem zusammenwirkenden Gegenkörper (18), die einstückig jeweils mit einem der beiden Distanzhalterelementen (4, 5) verbunden sind. Es resultiert ein einfach handzuhabender Distanzhalter (1).

## Beschreibung

Die Erfindung betrifft einen Distanzhalter zur Einstellung eines Abstandes zwischen einem ersten Bauteil und einem zweiten Bauteil gemäß dem Oberbegriff des Anspruches 1.

Ein derartiger Distanzhalter ist durch offenkundige Vorbenutzung bekannt. Die beiden Distanzhalterelemente dieses bekannten Distanzhalters werden in einem voreingestellten Abstand über eine im wesentlichen U-förmige Feder eingestellt, welche einen Riegelkörper aufweist, der in entsprechende Gegenkörper in den beiden Distanzhalterelementen eingreift. Diese Feder ist bei der Montage nicht einfach zu handhaben, da sie, um ihre Riegelfunktion zu erfüllen, recht stramm ausgeführt und gleichzeitig scharfkantig ist. Zudem kann die Feder leicht verloren werden, wodurch der bekannte Distanzhalter seine Funktion verliert.

Der Erfindung liegt daher die Aufgabe zugrunde, einen Distanzhalter der eingangs genannten Art derart weiterzubilden, dass er einfacher handhabbar ist.

Diese Aufgabe ist erfindungsgemäß gelöst durch einen Distanzhalter mit den im Kennzeichnungsteil des Anspruches 1 angegebenen Merkmalen.

Erfindungsgemäß wurde erkannt, dass die Riegelanordnung so ausgeführt sein kann, dass auf zusätzliche Riegelkomponenten über die beiden mit den Bauteilen verbundenen Distanzhalterelemente hinaus verzichtet werden kann. Dies verringert die Anzahl der Einzelteile, die für den Distanzhalter benötigt werden. Hierdurch kann eine Vereinfachung der Montage des Distanzhalters erreicht werden. Auf zusätzliche Kleinteile für die Riegelanordnung, die unbequem zu montieren sind und zudem verloren werden könnten, kann verzichtet werden. Dies erleichtert insbesondere die Montage des Distanzhalters.

Eine Riegelanordnung gemäß Anspruch 2 bietet die Möglichkeit einer besonders einfachen Montage diskret zu beabstandender Bauteile. Insbesondere können längere Bauteile durch Verwendung mehrerer erfindungsgemäßer Distanzhalter in gleichbleibendem Abstand zueinander angeordnet werden, ohne dass dieser jeweils nachgemessen werden muss.

Eine Anordnung der Distanzhalterelemente gemäß Anspruch 3 führt zu einem stabilen und gleichzeitig kompakten Distanzhalter.

Eine Riegelanordnung gemäß Anspruch 4 lässt sich so ausgestalten, dass sie bei der Montage einfach ver- und auch entriegelt werden kann. In Verbindung mit bekannten Nut/Nutstein-Anordnungen zur Befestigung der Distanzhalterelemente an den Bauteilen kann hierbei die Riegelanordnung so ausgeführt werden, dass die Drehbewegung, die zur Befestigung der Distanzhalterelemente an den Bauteilen erforderlich ist, gleichzeitig zur sicheren Verriegelung der beiden Distanzhalterelemente zueinander führt. Der Distanzhalter kann dabei so ausgeführt sein, dass entweder eine Rechts- oder eine Linksdrehung zur Verriegelung der Riegelanordnung führt.

Ein gemäß Anspruch 5 geformtes erstes Distanzhalterelement führt zu einer besonders einfach herstellbaren Riegelanordnung. Die bevorzugt zweizählig symmetrisch ausgeführte Hülsenquerschnittsform führt dazu, dass das zweite Distanzhalterelement in zwei um 180° gegeneinander verdrehte Orientierungen in das erste Distanzhalterelement eingeschoben werden kann, was die Montage zusätzlich erleichtert.

Riegelaufnahmen gemäß Anspruch 6 und eine Riegelnase gemäß Anspruch 7 lassen sich einfach herstellen.

Keilförmige Ausgestaltungen der Riegelnase und/oder der Riegelaufnahme gemäß den Ansprüchen 8 und 9 führen zu einer Klemmwirkung der Riegelanordnung in der verriegelten Position von Riegel- und Gegenkörper, was zu einer Sicherung dieser Position führt.

Mindestens eine optische Markierung gemäß Anspruch 10 erleichtert die Handhabung des Distanzhalters, falls z. B. ein bestimmter Abstand zwischen zwei längeren Bauteilen durch Gebrauch mehrerer erfindungsgemäßer Distanzhalter eingehalten werden soll.

Ein Ausführungsbeispiel der Erfindung wird nachfolgend anhand der Zeichnung näher erläutert. In dieser zeigen:
- Fig. 1: eine Seitenansicht eines zwischen zwei Bauteilen angeordneten Distanzhalters zur Einstellung eines Abstandes zwischen diesen;
- Fig. 2: einen Schnitt gemäß Linie II-II in Fig. 1;
- Fig. 3: eine zu Fig. 2 ähnliche Ansicht, bei der ein inneres Distanzhalterelement weggelassen ist;
- Fig. 4: eine zu Fig. 1 ähnliche Seitenansicht einer um 90° um die Längsachse gedrehten Anordnung des Distanzhalters zwischen den beiden Bauteilen;
- Fig. 5: eine zu Fig. 1 ähnliche Seitenansicht eines äußeren Distanzhalterelementes;
- Fig. 6: eine zu Fig. 3 ähnliche Ansicht des äußeren Distanzhalterelementes;
- Fig. 7: eine zu Fig. 6 ähnliche Ansicht des inneren Distanzhalterelementes, wobei die Blickrichtung der Fig. 7 entgegengesetzt zu derjenigen von Fig. 6 ist; und
- Fig. 8: eine Seitenansicht des inneren Distanzhalterelementes.

Ein Distanzhalter 1 dient zur Einstellung eines Abstandes zwischen Bauteilen 2, 3, nämlich Profilelementen eines Tragsystems, welches z. B. in der Sanitärtechnik bei der Vorwandinstallation zum Einsatz kommt.

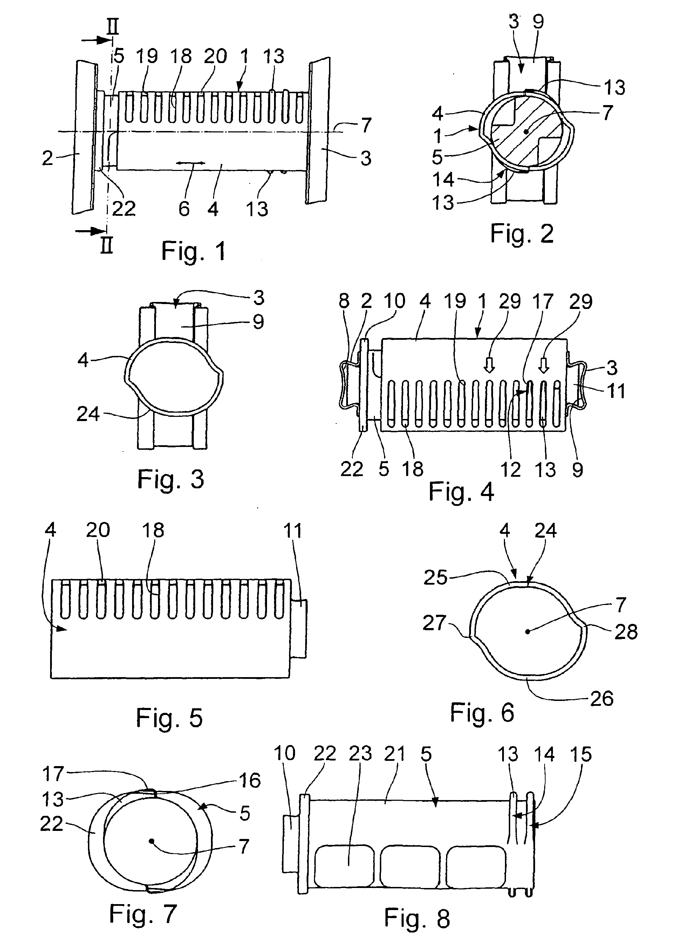

Der Distanzhalter 1 ist zweiteilig ausgeführt und besteht aus einem ersten, äußeren Distanzhalterelement 4 und einem zweiten inneren Distanzhalterelement 5. Die Distanzhalterelemente 4, 5 sind Druckguss-Komponenten aus Zink. Alternativ können die Distanzhalterelemente 4, 5 auch aus Polyamid, insbesondere auch aus glasfaserverstärktem Polyamid, hergestellt werden. Das erste Distanzhalterelement 4 ist hülsenförmig derart ausgebildet, dass das zweite Distanzhalterelement 5 zur Einstellung des Abstandes zwischen den beiden Bauteilen 2, 3 in das erste Distanzhalterelement 4 eingeschoben werden kann. Die durch einen Doppelpfeil 6 in Fig. 1 angedeutete Einschiebrichtung ist zu den zusammenfallenden Längsachsen 7 der beiden Distanzhalterelemente 4, 5 parallel.
Zur Verbindung der Bauteile 2, 3 über die Distanzhalterelemente 4, 5 weisen die Bauteile 2, 3 Nuten 8, 9 (vgl. Fig. 4) auf, in welche Nutsteine 10, 11 eingreifen. Der Nutstein 10 ist einstückig am inneren Distanzhalterelement 5, der Nutstein 11 einstückig am äußeren Distanzhalterelement 4 angeformt. Wie sich aus einer Zusammenschau der Fig. 4 und 5 ergibt, haben die Nutsteine 10, 11 aus unterschiedlichen Blickrichtungen betrachtet einen sich ändernden Querschnitt. Durch Drehung der Distanzhalterelemente 4, 5 um ihre Längsachse 7 relativ zu den Bauteilen 2, 3 lassen sich daher die Nutsteine 10, 11 in den Nuten 8, 9 der Bauteile 2, 3 verklemmen. Derartige Nut/Nutstein-Verbindungen sind bekannt.

Mit dem Distanzhalter 1 lässt sich ein einzustellender Abstand aus einer Mehrzahl diskreter Abstände zwischen den Bauteilen 2, 3 vorgeben. Hierzu weist der Distanzhalter 1 eine Riegelanordnung 12 auf. Diese umfasst als Riegelkörper insgesamt vier einstückig am inneren Distanzhalterelement 5 angeformte Riegelnasen 13. Letztere sind als in Umfangsrichtung um die Längsachse 7 des inneren Distanzhalterelementes 5 verlaufende Teilumfangs-Riegelwülste ausgebildet. Jeweils zwei Riegelnasen 13 sind um 180° gegeneinander versetzt an der gleichen Axialposition des Distanzhalterelementes 5 angeordnet, so dass die vier Riegelnasen 13 zwei axial zueinander beabstandete Riegelnasenpaare 14, 15 bilden. Wie Fig. 7 zeigt, erheben sich die Riegelnasen 13 in Umfangsrichtung im Uhrzeigersinn kontinuierlich immer stärker, wobei sie etwa ein Viertel des Umfanges des inneren Distanzhalterelementes 5 überdecken. Ein im Uhrzeigersinn führender Abschnitt der Riegelnasen 13 endet in einem Riegelanschlag 16.

Dieser im Uhrzeigersinn in der Darstellung von Fig. 7 führende Abschnitt der Riegelnasen 13 weist an seinen Flanken Schrägflächen 17 derart auf, dass er im die Längsachse 7 enthaltenden Querschnitt des inneren Distanzhalterelementes 5 keilförmig ausgeführt ist. Zudem verjüngt sich dieser führende Abschnitt der Riegelnasen 13 im Uhrzeigersinn, so dass er, wie die Aufsicht der Fig. 4 zeigt, in einer Spitze ausläuft.

Weiterhin umfasst die Riegelanordnung 12 als Gegenkörper für die Riegelkörper eine Mehrzahl von diskret voneinander beabstandeten Riegelaufnahmen 18. Die Riegelaufnahmen 18 sind als in Umfangsrichtung um die Längsachse 7 des äußeren Distanzhalterelementes 4 verlaufende Langlöcher ausgeführt. Sie erstrecken sich jeweils über etwa ein Viertel des Umfanges des äußeren Distanzhalterelementes 4. Insgesamt sind dreizehn äquidistant axial voneinander beanstandete Riegelaufnahmen 18 vorgesehen. Der axiale Abstand benachbarter Riegelaufnahmen 18 entspricht dabei demjenigen zwischen den Riegelnasenpaaren 14, 15.

Bei verriegelter Riegelanordnung 12 greifen, wie Fig. 4 zeigt, die Riegelnasen 13 in vier der Riegelaufnahmen 18 ein. In dieser Eingriffposition sind den sich keilförmig über die Schrägflächen 17 verjüngenden Abschnitten der Riegelnasen 13 sich entsprechend keilförmig verjüngende Abschnitte 19 der Riegelaufnahmen 18 zugeordnet. In der Eingriffposition liegen die Riegelanschläge 16 der Riegelnasen 13 an entsprechenden Gegenanschlägen 20 der Riegelaufnahmen 18 an.

Das innere Distanzhalterelement 5 hat, wie die Fig. 7 und 8 zeigen, im Wesentlichen einen zylindrischen Grundkörper 21. Zwischen dem Grundkörper 21 und dem Nutstein 10 ist eine über den Grundkörper 21 überstehende Zwischenplatte 22 angeordnet. Der Grundkörper 21 weist insgesamt sechs in der Aufsicht in etwa rechteckige und im Schnitt (vgl. Fig. 2) in etwa quadrantenförmige Ausnehmungen 23 auf. Diese dienen der Gewichtsreduktion des Grundkörpers 21.
Wie die Ansicht der Fig. 6 zeigt, ist der Querschnitt des hülsenförmigen äußeren Distanzhalterelementes 4 nicht rund, sondern weicht von der Rotationssymmetrie derart ab, dass eine zweizählig um die Längsachse 7 symmetrische Querschnittsform 24 resultiert.

Diese Querschnittsform 24 weist zwei im Wesentlichen halbkreisförmige Abschnitte 25, 26 auf, die über Kantenbereiche 27, 28 mit jeweils einer parallel zur Längsachse 7 verlaufenden Kante aneinander angrenzen. Die beiden Hülsenabschnitte 25, 26 sind zueinander senkrecht zur Längsachse 7 in einer Ebene verschoben, die definiert ist durch die Längsachse 7 einerseits und durch die Kanten der Kantenbereiche 27, 28 andererseits.

Zur Erleichterung der Auswahl eines einzustellenden Abstandes zwischen den Bauteilen 2, 3 trägt das äußere Distanzhalterelement 4 zwei Markierungen 29, die in Form von Pfeilen auf bestimmte der Riegelaufnahmen 18 zeigen und diese dadurch kennzeichnen. Die Markierungen 29 sind als Pfeile ausgebildet, die zusätzlich die Funktion haben, die Verriegelungsrichtung anzugeben, d. h. die Richtung der Relativ-Drehbewegung zwischen dem äußeren Distanzhalterelement 4 und dem inneren Distanzhalterelement 5, bei der die Riegelnasen 13 verriegelnd Aufnahme in den sich keilförmig verjüngenden Abschnitten 19 der Riegelaufnahmen 18 finden.

Zur Einstellung eines Abstandes zwischen den Bauteilen 2, 3 wird zunächst das innere Distanzhalterelement 5 in das äußere Distanzhalterelement 4 eingeführt und je nachdem längs des Doppelpfeils 6 so verschoben, dass die Riegelnasen 13 den für den vorgegebenen Abstand gewünschten Riegelaufnahmen 18 zugeordnet sind. Aufgrund des von der Rotationssymmetrie abweichenden Querschnittes des äußeren Distanzhalterelementes 4 kann das innere Distanzhalterelement 5 in das äußere Distanzhalterelement 4 nur unter Einhaltung einer bestimmten Relativ-Winkellage eingeschoben werden.

Anschließend wird das innere Distanzhalterelement 5 relativ zum äußeren Distanzhalterelement 4 in etwa eine Vierteldrehung entgegen dem Uhrzeigersinn um die Längsachse 7 gedreht, bis die Riegelanschläge 16 der Riegelnasen 13 an den Gegenanschlägen 20 der entsprechenden Riegelaufnahmen 18 anliegen. Bedingt durch die Schrägflächen 17 der Riegelnasen 13 sowie durch die keilförmig sich verjüngenden Abschnitte 19 der entsprechenden Riegelaufnahmen 18 sind in dieser Position die Riegelnasen 13 in den entsprechenden Riegelaufnahmen 18 leicht verklemmt, so dass ein unbeabsichtigtes Lösen der Riegelanordnung 12 verhindert ist.

Anschließend wird der so hinsichtlich des Bauteilabstandes voreingestellte Distanzhalter 1 zwischen die beiden Bauteile 2, 3 eingeführt und durch Drehung der beiden Distanzhalterelemente 4, 5 gemeinsam aus Sicht des inneren Distanzhalterelementes 5 entgegen dem Uhrzeigersinn über die in die Nuten 8, 9 eingreifenden Nutsteine 10, 11 verbunden.

## Patentansprüche

1. Distanzhalter (1) zur Einstellung eines Abstandes zwischen einem ersten Bauteil (2) und einem zweiten Bauteil (3)
- mit einem ersten Distanzhalterelement (4), welches mit dem ersten Bauteil (2) verbindbar ist,
- mit einem zweiten Distanzhalterelement (5), welches mit dem zweiten Bauteil (3) verbindbar ist,
- mit einer Riegelanordnung (12), mittels der ein einzustellender Abstand aus einer Mehrzahl diskreter einstellbarer Abstände vorgegeben werden kann und die mindestens einen Riegelkörper (13) und mindestens einen mit diesem zusammenwirkenden Gegenkörper (18) umfasst,
**dadurch gekennzeichnet, dass**
- der Riegelkörper (13) und der Gegenkörper (18) einstückig jeweils mit einem der beiden Distanzhalterelemente (4, 5) verbunden sind.

2. Distanzhalter nach Anspruch 1, **dadurch gekennzeichnet, dass** eines der Distanzhalterelemente (4) eine Mehrzahl von diskret voneinander beabstandeten Riegelaufnahmen (18) aufweist, welche Gegenkörper der Riegelanordnung (12) darstellen und mit mindestens einer Riegelnase (13) des anderen Distanzhalterelementes (5), welche einen Riegelkörper der Riegelanordnung (12) darstellt, verriegelbar sind.

3. Distanzhalter nach Anspruch 1 oder 2, **dadurch gekennzeichnet, dass** das erste Distanzhalterelement (4) hülsenförmig derart ausgebildet ist, dass das zweite Distanzhalterelement (5) zur Einstellung des Abstandes in das erste Distanzhalterelement (4) längs einer Einschiebrichtung (6) eingeschoben werden kann.

4. Distanzhalter nach Anspruch 3, **dadurch gekennzeichnet, dass** die Riegelanordnung (12) so ausgeführt ist, dass eine Verriegelung der Distanzhalterelemente (4, 5) zueinander durch Drehung des zweiten Distanzhalterelementes (5) relativ zum ersten Distanzhalterelement (4) um eine zur Einschiebrichtung (6) parallele Drehachse (7) erfolgt.

5. Distanzhalter nach Anspruch 3 oder 4, **dadurch gekennzeichnet, dass** das erste Distanzhalterelement (4) senkrecht zur Einschiebrichtung(6) eine nicht rotationssymmetrische Hülsenquerschnittsform (24), insbesondere eine zweizählig symmetrische Hülsenquerschnittsform (24) aufweist.

6. Distanzhalter nach einem der Ansprüche 3 bis 5, **dadurch gekennzeichnet, dass** die Riegelaufnahmen (18) als in Umfangsrichtung um eine zur Einschiebrichtung (6) parallele Längsachse (7) des einen Distanzhalterelementes (4) verlaufende Langlöcher in einem der Distanzhalterelemente (4) ausgeführt sind.

7. Distanzhalter nach einem der Ansprüche 3 bis 6, **dadurch gekennzeichnet, dass** die mindestens eine Riegelnase (13) als in Umfangsrichtung um eine zur Einschiebrichtung (6) parallele Längsachse (7) des einen Distanzhalterelementes (5) verlaufende Teilumfangs-Riegelwulst an einem der Distanzhalterelemente (5) ausgeführt ist.

8. Distanzhalter nach Anspruch 7, **dadurch gekennzeichnet, dass** die Riegelnase (13) zumindest abschnittsweise, was den Querschnitt des einen Distanzhalterelementes (5) betrifft, der die Längsachse (7) enthält, keilförmig ausgeführt ist.

9. Distanzhalter nach Anspruch 7 oder 8, **dadurch gekennzeichnet, dass** sich die Riegelnase (13) und/oder die Riegelaufnahme (18) zumindest abschnittsweise (17, 19) in Umfangsrichtung um die Längsachse (7) des Distanzhalterelementes (4, 5) keilförmig verjüngt.

10. Distanzhalter nach einem der Ansprüche 1 bis 9, **dadurch gekennzeichnet, dass** mindestens ein Distarizhalterelement (4, 5) mindestens eine optische Markierung (29) zur Kennzeichnung eines bestimmten Abstandes zwischen den Bauteilen (2, 3) aufweist.
